# EUROPÄISCHE PATENTSCHRIFT

(11) **EP 1 393 617 B1**
(45) Veröffentlichungstag und Bekanntmachung des Hinweises auf die Patenterteilung: **12.07.2006**
(21) Anmeldenummer: 03018500.3
(22) Anmeldetag: 15.08.2003
(51) Int. Cl.: A01G 9/14

(54) **Lagerungsplattform zum Lagern und Bewässern von Pflanzen sowie Bewässerungsvorrichtung**
Storage tray for storing and watering plants, and watering device
Palette de stockage pour entreposer et irriguer des plantes, et dispositif d'irrigation

(30) Priorität: 30.08.2002 DE 20213719 U
(43) Veröffentlichungstag der Anmeldung: 03.03.2004
(73) Patentinhaber: Korte, Hermann, Dipl.-Ing., 26903 Surwold (DE)
(72) Erfinder: Korte, Hermann, Dipl.-Ing., 26903 Surwold (DE); Schomaker, Rudolf, 49751 Sögel (DE); Trinczek, Reinhold, 21493 Grabau (DE)
(74) Vertreter: Philipp, Matthias

(56) Entgegenhaltungen:
- FR-A- 2 757 828
- US-A- 3 772 827
- US-A- 4 170 844
- US-A- 5 673 511

## Beschreibung

Die Erfindung betrifft eine Lagerungsplattform zum Lagern, Bewässern und Transportieren von Pflanzen, die rechteckig ist und an zwei parallelen Schmalseiten jeweils zwei Halterungselemente zum Einhängen in Gestellstreben aufweist, sowie eine damit gebildete Bewässerungsvorrichtung. Eine ähnliche Platform bzw. Vorrichtung ist bereits aus US-A-4 170 844 bekannt.

Die Halterungselemente derartiger bekannter, plattenförmiger Lagerungsplattformen, mit denen das Einhängen in die Befestigungsöffnungen oder -schlitze von bspw. im Querschnitt U-förmigen Gestellstreben eines Halterungsgestells erfolgt, erstrecken sich in Längsrichtung der Lagerungsplattform, so daß der Einsetz- bzw. Einhängevorgang in Längsrichtung der Lagerungsplattform erfolgt. Mit anderen Worten wird eine Lagerungsplattform in vier vertikale, an Ecken eines Rechtecks angeordneten Gestellstreben eingehängt, indem zunächst zwei Halterungselemente, die an einer gemeinsamen Stirn- oder Schmalseite der Lagerungsplattform angeordnet sind, in gewünschte Einhängeausnehmungen von zwei entsprechenden Gestellstreben eingesetzt, wobei die Lagerungsplattform hierbei aufgrund des festen gegenseitigen Abstands der vier Gestellstreben um eine Querachse, die senkrecht zu den Längsseiten der Lagerungsplattform verläuft, geneigt werden muß, um sie zwischen die Gestellstreben bewegen zu können. Nachdem die beiden genannten Halterungselemente vollständig bzw. weitestmöglich in ihre Einhängeausnehmungen eingeschoben worden sind, kann die Lagerungsplattform in eine horizontale Lage gebracht werden, so daß die verbleibenden, gegenüberliegenden Halterungselemente, die der an deren Schmalseite der Lagerungsplattform zugeordnet sind, in Ausrichtung mit entsprechenden Einhängeausnehmungen der anderen beiden Gestellstreben kommen und durch im wesentlichen horizontales Verschieben der Lagerungsplattform in diese eingeführt werden können. Meist sind Rastausnehmungen vorgesehen, so daß dann, wenn alle vier Halterungselemente etwa gleich tief in die entsprechenden Einhängeausnehmungen eingeschoben sind, diese mittels der Rastausnehmungen formschlüssig mit den Einhängeausnehmungen zusammenwirken und ein fester, unverschieblicher Halt gewährleistet ist.

Diese Anordnung hat sich zwar in der Praxis bewährt, ist aber dahingehend nachteilig, daß die Lagerungsplattform in den Bereichen ihrer Schmalseiten, die sich im eingesetzten Zustand benachbart zu den Gestellstreben befinden, in Längsrichtung gesehen kürzer ausgebildet sein muß als der entsprechende innere, lichte Abstand zwischen den Gestellstreben. Dies ist aufgrund der vorstehend beschriebenen Einsetzreihenfolge notwendig, damit ein Handhabungsabstand zwischen den Gestellstreben und der Lagerungsplattform in Längsrichtung geschaffen wird, um die Lagerungsplattform zum Einsetzen der Halterungselemente in Längsrichtung hin- und herbewegen zu können.

Ein derartiger Abstand hat allerdings notwendigerweise eine Verkleinerung der Grund- oder Standfläche der Lagerungsplattform zur Folge, die zum Aufstellen von Pflanzgefäßen o.ä. genutzt werden kann.

Die Aufgabe der Erfindung besteht daher darin, eine Lagerungsplattform anzugeben, die bei unverändertem gegenseitigen Abstand der Gestellstreben eine größtmögliche nutzbare Stellfläche bietet.

Diese Aufgabe wird erfindungsgemäß durch eine Lagerungsplattform zum Lagern und Bewässern von Pflanzen gelöst, die rechteckig ist und an zwei parallelen Schmalseiten jeweils zwei Halterungselemente zum Einhängen in Gestellstreben aufweist, wobei sich die Lagerungsplattform dadurch auszeichnet, daß jedes Halterungselement einen entlang der jeweiligen Schmalseite verlaufenden und in Richtung einer jeweils zunächst liegenden Längsseite frei endenden Eingriffs-Endabschnitt aufweist.

Hierdurch wird ein Einhängen der Lagerungsplattform in Querrichtung ermöglicht, so daß die vorstehend erläuterten Nachteile vermieden werden. Die Bezeichnung "Einhängen in Querrichtung" bedeutet im Rahmen der vorliegenden Erfindung, daß die rechteckige Lagerungsplattform beim Einhängen bzw. Einsetzen der Halterungselemente in damit zusammenwirkende Aufnahmemittel der Gestellstreben, z.B. ein Einhängeausnehmnungen, lediglich in ihrer Querrichtung hin- und herbewegt werden muß, um die Halterungselemente in Eingriff zu bringen, nicht hingegen in ihrer Längsrichtung, so daß kein Abstand zwischen den Schmalseiten der Lagerungsplattform und den Gestellstreben vorhanden sein muß.

Bevorzugt sieht die Erfindung vor, daß die Eingriffs-Endabschnitte der Halterungselemente jeweils in einem Eckbereich der Lagerungsplattform angeordnet sind. Die Halterungselemente können L-förmig ausgebildet sein und einen Halteschenkel und einen den Eingriffs-Endabschnitt bildenden Einhängeschenkel aufweisen.

Die Halteschenkel können an einer Seitenwand befestigt sein, und die Eingriffs-Endabschnitte können eine Ausnehmung zum formschlüssigen Einhängen in Gestellstreben aufweisen.

Die Schmalseiten zwischen den Halterungselementen sind bevorzugt jeweils mit einer Erweiterung versehen, innerhalb der jeweils ein Überlauf angeordnet ist.

Es kann vorgesehen sein, daß die Lagerungsplattform an einer Unterseite mit Rollen versehen ist.

In weiterer Ausgestaltung kann vorgesehen sein, daß die Lagerungsplattform, insbesondere in Form einer untersten Lagerungsplattform einer Bewässerungsvorrichtung, rechteckig und in jedem Eckbereich mit einem Aufnahmemittel für eine Gestellstrebe versehen ist.

Die Erfindung sieht weiter bevorzugt vor, daß die Lagerungsplattform wannenartig ausgebildet ist und einen Überlauf zum Vorgeben eines gewünschten Flüssigkeitspegels aufweist. Hierfür kann die Lagerungsplattform mit Seitenwänden versehen sein. Der Überlauf kann zum Einstellen eines gewünschten Flüssigkeitspegels stufenlos oder stufenweise höhenverstellbar sein. Weiterhin kann der Überlauf ein rohrförmiges Ableitelement aufweisen, das fest oder höhenverstellbar in einer Öffnung in der Lagerungsplattform gehalten ist. Hierbei kann das Ableitelement stufenweise oder stufenlos höhenverstellbar sein. Es kann optische Markierungen und/oder mechanische Rastmittel in vorbestimmten Positionen aufweisen, und es kann mit mindestens einer seitlich gerichteten Ausflußöffnung versehen sein. Außerdem kann das Ableitelement drehbar, ggf. mit Begrenzung des Drehwinkels, in der Öffnung gehalten sein. Dadurch kann in einer Bewässerungsvorrichtung der ablaufende Wasserstrahl genau auf eine unterhalb befindliche Lagerungsplattform gerichtet werden.

Zur Bildung des Überlaufs kann einer Öffnung in einer Seitenwand der Lagerungsplattform ein höhenverstellbares Schiebeelement zugeordnet sein.

Schließlich kann die Lagerungsplattform Halterungselemente wie Haken, Ösen, vorstehende Stifte oder Schienen zum Anbringen an einer Trageinrichtung, insbesondere an Streben eines Gestells, Regals oder Transportwagens, aufweisen.

In bezug auf die Bewässerungsvorrichtung wird die Aufgabe der Erfindung durch eine Bewässerungsvorrichtung mit mindestens zwei übereinander angeordneten Lagerungsplattformen zum Lagern und Bewässern von Pflanzen gelöst, die rechteckig sind und an zwei parallelen Schmalseiten jeweils zwei Halterungselemente zum Einhängen in Einhängeausnehmungen von Gestellstreben aufweisen, wobei die Lagerungsplattformen so angeordnet sind, daß eine über einen Überlauf einer (jeder) Lagerungsplattform ablaufende Flüssigkeit in eine darunter, insbesondere zunächst benachbart angeordnete Lagerungsplattform fließen kann, mit vier vertikalen Gestellstreben, die in Eckbereichen der Lagerungsplattformen angeordnet und mit Einhängeausnehmungen zum Einhängen der Halterungselemente versehen sind, wobei die Einhängeausnehmungen von jeweils einer Schmalseite der Lagerungsplattform zugeordneten gestellstreben zumindest teilweise einander zugekehrt sind, so daß die Lagerungsplattformen in Querrichtung einsetz- und herausnehmbar sind.

Die Lagerungsplattformen der Bewässerungsvorrichtung sind bevorzugt erfindungsgemäß ausgebildet. Insbesondere kann vorgesehen sein, daß die Lagerungsplattformen so angeordnet sind, daß das rohrförmige Ableitelement einer (jeder) oberen Lagerungsplattform bis auf einen Boden einer darunter, insbesondere zunächst benachbart angeordneten Lagerungsplattform reicht.

Die Gestellstreben sind bevorzugt L-, U-, Rechteck- oder auch Rohrprofile.

Weitere Vorteile und Merkmale der Erfindung ergeben sich aus der nachfolgenden Beschreibung von Ausführungsbeispielen, wobei auf eine Zeichnung Bezug genommen wird, in der
Fig. 1 eine Draufsicht auf eine erste Ausführungsform einer erfindungsgemäßen Lagerungsplattform zeigt,
Fig. 2 eine perspektivische Ansicht der Lagerungsplattform nach Fig. 1 zeigt,
Fig. 3 einen vergrößerten Teilbereich der Lagerungsplattform nach Fig. 1 und 2 zeigt,
Fig. 4 eine Schnittansicht eines Überlaufs der Lagerungsplattform nach Fig. 1 - 3 zeigt,
Fig. 5 eine perspektivische Ansicht einer weiteren Ausführungsform einer erfindungsgemäßen Lagerungsplattform zeigt,
Fig. 6 eine Draufsicht auf die Lagerungsplattform nach Fig. 5 zeigt,
Fig. 7 eine perspektivische Ansicht von mehreren aufeinander gestapelten Lagerungsplattformen nach Fig. 5 und 6 zeigt,
Fig. 8 eine Seitenansicht entsprechend Fig. 7 zeigt,
Fig. 9 eine perspektivische Ansicht einer erfindungsgemäßen Bewässerungsvorrichtung zeigt,
Fig. 10 die Bewässerungsvorrichtung nach Fig. 9 aus einem anderen Blickwinkel zeigt, und
Fig. 11 die Bewässerungsvorrichtung nach Fig. 9 und 10 in einer Vorderansicht zeigt.

Bei bekannten, rechteckigen, ebenen Lagerungsplattformen sind Halterungselemente in Form von an Schmalseiten in Längsrichtung vorstehenden Eingriffs-Endabschnitten wie Haken, Stifte o.ä. ausgebildet. Eine derartige Lagerungsplattform ist zum Einhängen bzw. Einsetzen in ein Gestell vorgesehen, das vier vertikale Gestellstreben aufweist, die an den Ecken eines Rechtecks angeordnet sind. Die gegenseitigen lichten Abstände der Gestellstreben und die Maße der Lagerungsplattform sind so aufeinander abgestimmt, daß die Lagerungsplattform in der nachstehend erläuterten Weise in Längsrichtung in das Gestell bzw. die Gestellstreben eingesetzt werden kann. Hierbei werden zunächst zwei Haken, die sich an einer gemeinsamen Schmalseite einer Lagerungsplattform befinden, in entsprechende Einhängeausnehmungen von zwei eine Schmalseite des genannten Rechtecks bildenden Gestellstreben eingesetzt und weitestmöglich in diese eingeschoben, indem die Lagerungsplattform in ihrer Längsrichtung bewegt wird. Bei diesem Vorgang muß die Lagerungsplattform schräg geneigt sein, um einen Handhabungsabstand zwischen den Haken und Gestellstreben, die den einzusetzenden bzw. bereits eingesetzten Haken gegenüberliegen, zu schaffen. Ausgehend von dieser geneigten Position kann die Lagerunsgplattform nun, nachdem zwei Haken eingesetzt sind, in eine im wesentlichen horizontale Lage gebracht werden, so daß die Haken der gegenüberliegenden Schmalseite der Lagerungsplattform in Ausrichtung mit entsprechenden Einhängeausnehmungen der gegenüberliegenden Gestellstreben des Gestells kommen und unter Bewegung der Lagerungsplattform in Längsrichtung (in entgegengesetzter Richtung wie zuvor) in diese eingeführt werden, wobei die bereits eingesetzten und vollständig eingeschobenen Haken teilweise wieder herausbewegt werden, bis sich alle vier Haken in etwa gleich tief in den vier Einhängeausnehmungen der Gestellstreben befinden. In dieser Stellung können Rastausnehmungen der Haken in die Ausnehmungen der Gestellstreben formschlüssig einrasten, so daß die Lagerungsplattform in ihrer gewünschten Lage fixiert ist.

Aufgrund der sich in Längsrichtung der Lagerungsplattform erstreckenden Haken und der daraus resultierenden Einsetzbewegung der Lagerungsplattform in deren Längsrichtung ist es erforderlich, daß die Lagerungsplattform in ihren Eckbereichen in eingesetztem Zustand einen gewissen Abstand von den Gestellstreben aufweist, d.h. zumindest in den Eckbereichen etwas kürzer ist als der lichte Abstand in Längsrichtung zwischen den Gestellstreben, um den beschriebenen Einsetzvorgang ausführen zu können. Die genannten Einhängeausnehmungen müssen bei diesem Stand der Technik ersichtlich so angeordnet sein, daß Einhängeausnehmungen von jeweils einer Längsseite der Lagerungsplattform zugeordneten Gestellstreben einander zugekehrt sind.

Bei der erfindungsgemäßen Ausbildung der Lagerungsplattform ist die vorstehend beschriebene verkürzte Ausbildung der Lagerungsplattform in Längsrichtung nicht erforderlich, da die Ausbildung der Halterungselemente ein Einsetzen in Querrichtung ermöglicht.

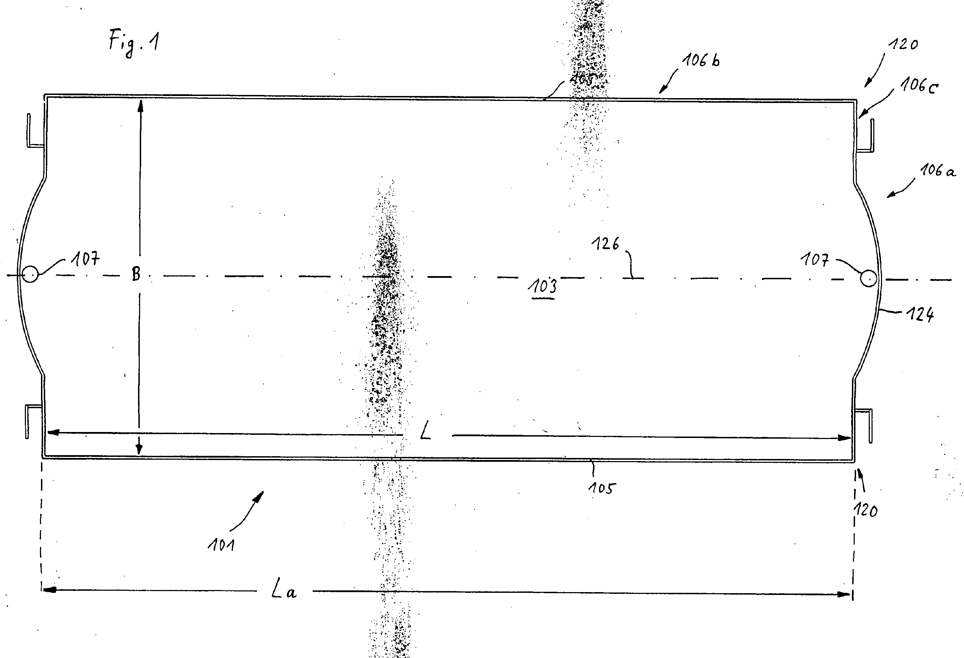

Fig. 1 bis 3 erläutern den Aufbau einer erfindungsgemäßen Lagerungsplattform 101. Diese Ausführungsform entspricht den Ansprüchen 9 bis 18, wobei die Lagerungsplattform wannenartig mit Seitenwänden ausgebildet ist und einen höhenverstellbaren Überlauf aufweist, um einen gewünschten Flüssigkeitspegel innerhalb der wannenartigen Lagerungsplattform vorzugeben. Dies hat den Vorteil, daß das von den Pflanzen nicht sofort aufgenommene Wasser nicht sogleich abfließt, sondern der Wasserstand durch die Seitenwände gehalten und durch den Überlauf gesteuert wird und bei einer Anordnung mehrerer Lagerungsplattformen übereinander das Wasser von einer Lagerungsplattform in die nächste fließt. Die Anzahl und Anordnung von Überläufen folgt Zweckmäßigkeitsüberlegungen.

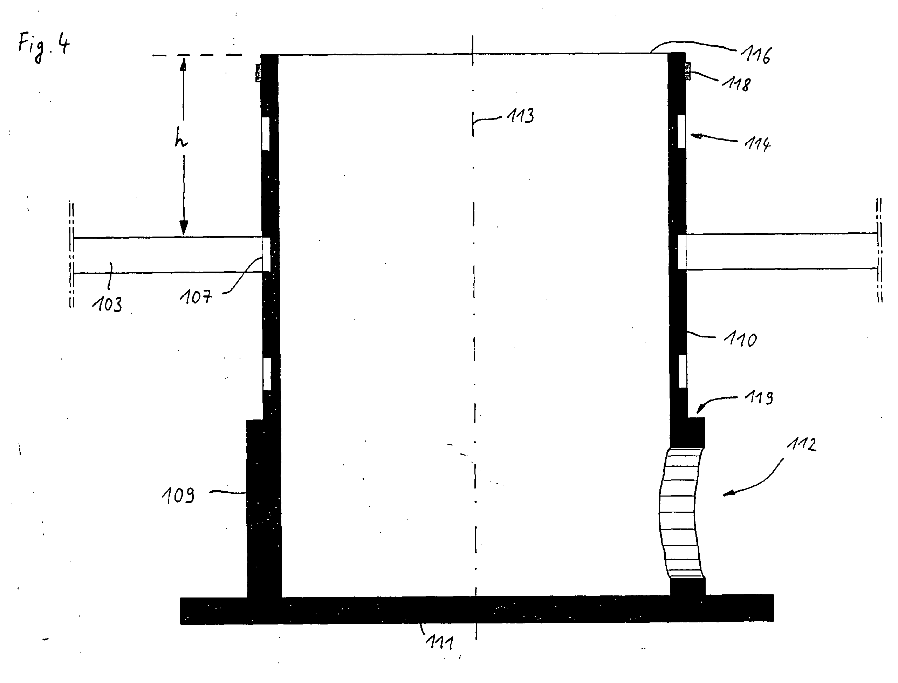

Die Lagerungsplattform 101 ist im Ganzen rechteckig mit einem Boden 103, Seitenwänden 105, Längsseiten 106b und Schmalseiten 106a, Ecken 120 sowie zwei Öffnungen 107, in denen sich hier nicht dargestellte Überläufe 109 (weiter unten im Zusammenhang mit Fig. 4 erläutert) befinden. Im Bereich der Schmalseiten 106a ist jeweils eine Erweiterung 124 vorgesehen, innerhalb der die Öffnung 107 angeordnet ist. Die Erweiterung 124 ist im dargestellten Ausführungsbeispiel kreisbogenförmig, könnte allerdings auch anders geformt sein, beispielsweise rechteckig, dreieckig oder in sonstiger Weise. Der Zweck der Erweiterung 124 besteht darin, die Öffnung 107 bzw. den Überlauf 109 außerhalb einer rechteckigen Lagerungsfläche mit Abmessungen L x B anordnen zu können, die durch die Längsseiten 106b und durch gerade Abschnitte 106c der Schmalseiten 106a oder anders gesagt durch die Ecken 120 der Lagerungsplattform 101 festgelegt ist (Länge, Breite der inneren Standfläche der Lagerungsplattform).

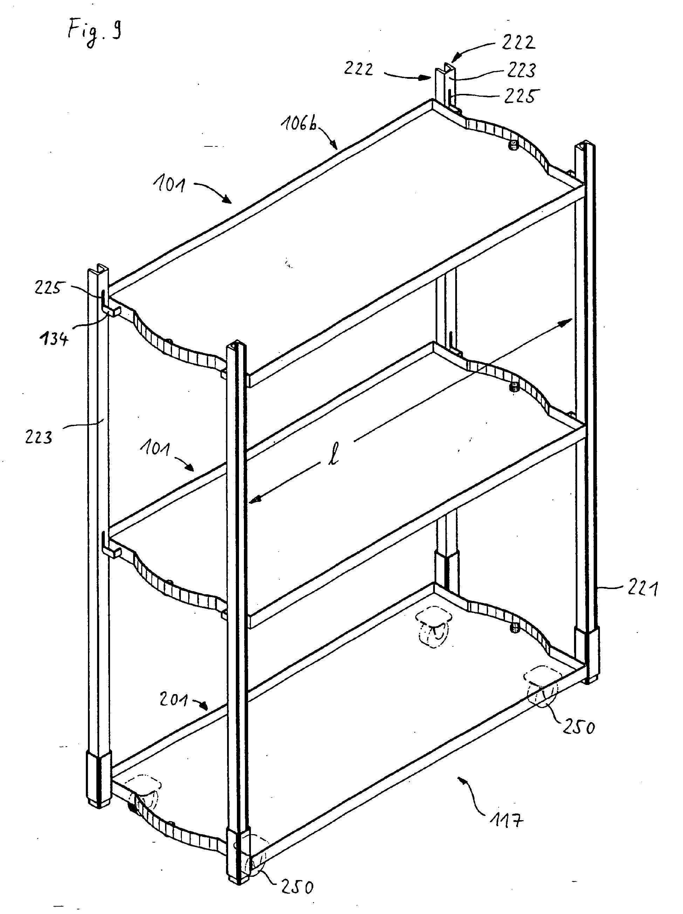

Die Erweiterung 124 könnte auch unmittelbar an den Ecken 120 der Lagerungsplattform 101 beginnen, wobei dann die genannte rechteckige Lagerungsfläche durch die Eckpunkte der Lagerungsplattform festgelegt wäre. Wesentlich ist in diesem Zusammenhang, daß eine Anordnung des Überlaufs 109 innerhalb der genannten rechteckigen Lagerungsfläche der Lagerungsplattform nachteilig wäre. Das liegt daran, daß eine Aufstellung von Pflanzgefäßen auf der Lagerungsplattform meist in rechteckigen Sammelboxen zu beispielsweise jeweils sechs einzelnen Pflanzgefäßen erfolgt, wobei die Länge eine Sammelbox der Breite B der Lagerungsplattform und deren Breite einem ganzzahligen Bruchteil von deren Länge L entspricht. Eine derartige Aufstellung ist ausschließlich innerhalb der genannten rechteckigen Lagerungsfläche möglich. Andererseits ist die Länge L der Lagerungsfläche dadurch vorgegeben, daß die Abmessungen und gegenseitigen Abstände von Gestellstreben bei einer Bewässerungsvorrichtung entsprechend Figur 9 bis 11 in der Praxis aufgrund einer großen Anzahl bereits existierender Bewässerungsvorrichtungen vorgegeben ist. Dabei sind mittelbar auch die Abmessungen L, B der Lagerungsplattform vorgegeben, innerhalb der sich kein Überlauf befinden sollte.

Figur 4 zeigt eine Ausführungsform eines Überlaufs oder Ableitelements 109, der in die Öffnung 107 des Bodens 103 eingesetzt ist.

Der Überlauf 109 besteht aus einem in einer Richtung (oben) offenen zylindrischen Grundkörper 110, der an einem unteren Ende mit einer kreisförmigen Bodenwand 111 abgeschlossen ist. Eine Abflußöffnung 112 ermöglicht das Abfließen von Wasser, das von oben über einen Rand 116 in den zylindrischen Grundkörper 110 einströmt. Durch Drehen des Überlaufs 109 um seine Längsachse 113 kann die Richtung der Abflußöffnung 112 und damit die Abflußrichtung des ausströmenden Wassers bestimmt werden. Dadurch kann sichergestellt werden, daß der ablaufende Wasserstrahl auf eine darunter befindliche Lagerungsplattform trifft. Auch eine Arretierung bzw. Begrenzung des Drehwinkels kann vorgesehen sein.

Selbstverständlich sind auch mehrere Abflußöffnungen 112 möglich, die über den Umfang des Grundkörper 110 verteilt angeordnet sind.

Wie Figur 4 weiter zeigt, ist der Grundkörper 110 auf seiner Außenseite mit mehreren Rastelementen 114 (Ausnehmungen oder Vorsprünge) versehen, die eine Höheneinstellung in vorgegebenen Abständen ermöglichen, d.h. so, daß der obere Rand 116 des Grundkörpers 110 in einer gewünschten Höhe h oberhalb des Bodens 103 steht, wodurch ein maximaler Wasserstand oder Pegel h auf dem Boden vorgegeben ist.

Wegen des Anschlags 118 bleibt auch bei ganz abgesenktem Überlauf 109 stets ein Rest an Wasser in der Lagerungsplattform stehen. Wenn eine Restentleerung gewünscht ist, kann dies durch Anordnen einer Ausklinkung in dem Überlauf und/oder durch Vorsehen einer Vertiefung im Boden 103 im Bereich der Öffnung 107 erfolgen. Außerdem kann vorgesehen sein, daß der Boden 103 in sich gebogen bzw. gewölbt ausgebildet ist, so daß zum einen eine größere Stabilität erzielt wird und zum anderen ein Gefälle erreicht wird, so daß das Wasser stets in Richtung auf den bzw. die Überläufe abfließt. Dadurch ist gewährleistet, daß die Lagerungsplattform ganz entleert werden kann und beim Herausnehmen praktisch wasserfrei ist.

Anstelle der Rastelemente 114 können auch optische Markierungen vorgesehen sein, die eine Einstellung einer gewünschten Höhe h erleichtern. Im Bereich des oberen Rands 116 ist ein Anschlag 118 vorgesehen, der ein vollständiges Herausziehen des Überlaufs 109 aus der Öffnung 107 verhindert oder zumindest erschwert. Ein Absatz 119 legt einen maximal einstellbaren Pegel fest (Überlauf 109 ganz nach oben geschoben).

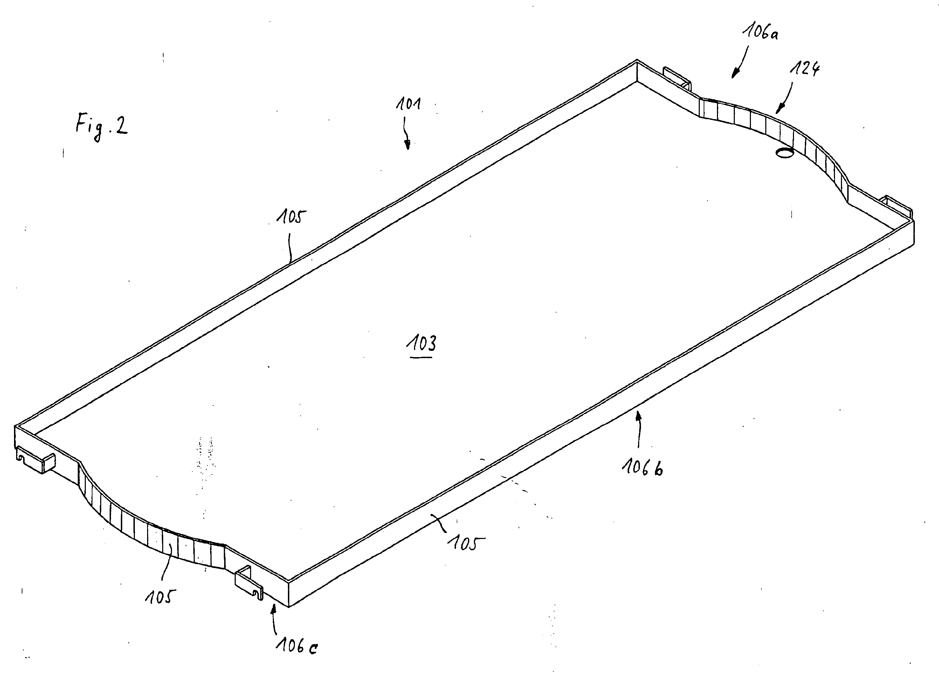

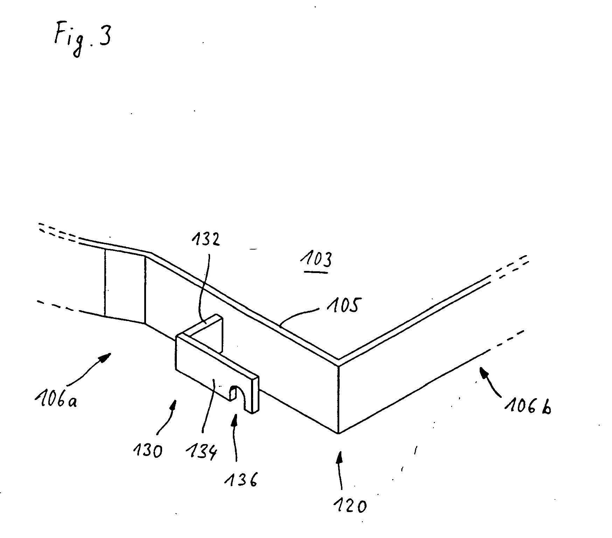

Wie Figur 1 und 2 und insbesondere Figur 3 in vergrößertem Maßstab zeigen, sind an den Seitenwänden 105 im Bereich der Schmalseiten 106a der Lagerungsplattform 101 im Bereich der Ecken 120 bzw. in der Nähe der Längsseiten 106b Halterungselemente 130 angeordnet, die in der dargestellten Ausführungsform L-förmig ausgebildet sind und einen Halteschenkel 132 aufweisen, der an der Seitenwand 105 befestigt ist, sowie einen von dem Halteschenkel abgehenden Einhängeschenkel 134, der in Richtung auf die zunächstliegende Längsseite 106b frei endet und senkrecht zu dieser und. parallel zu der ihm zugeordneten Schmalseite 106a angeordnet ist. Wie insbesondere Figur 3 zeigt, weist der Einhängeschenkel 134 eine halbkreis- oder schlitzförmige Ausnehmung 136 auf, damit die Lagerungsplattform 101 in noch zu erläuternder Weise in Gestellstreben einer Bewässerungsvorrichtung eingehängt werden kann.

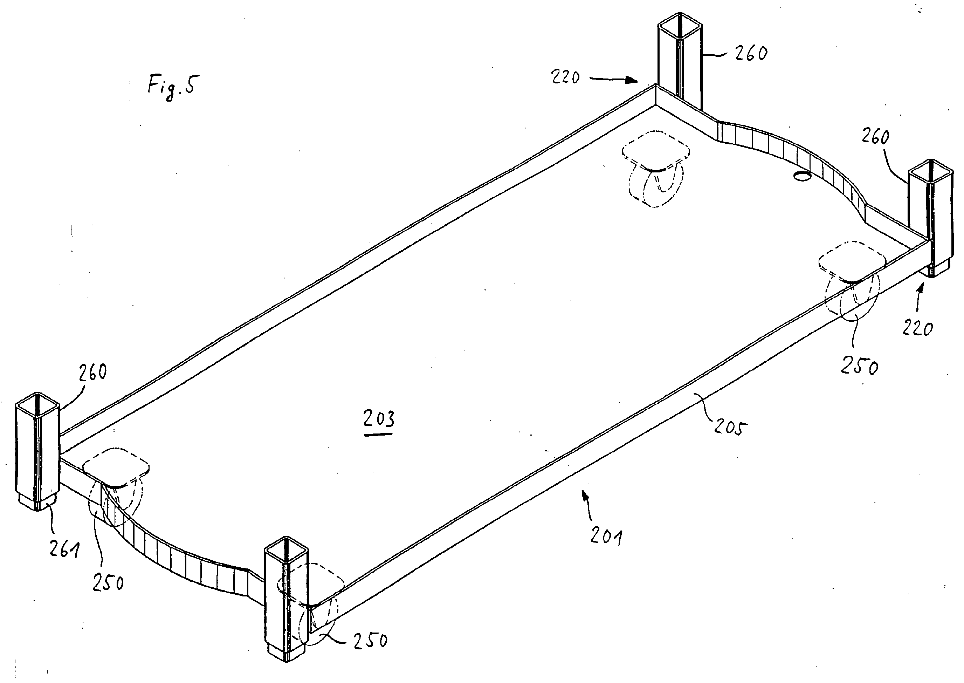

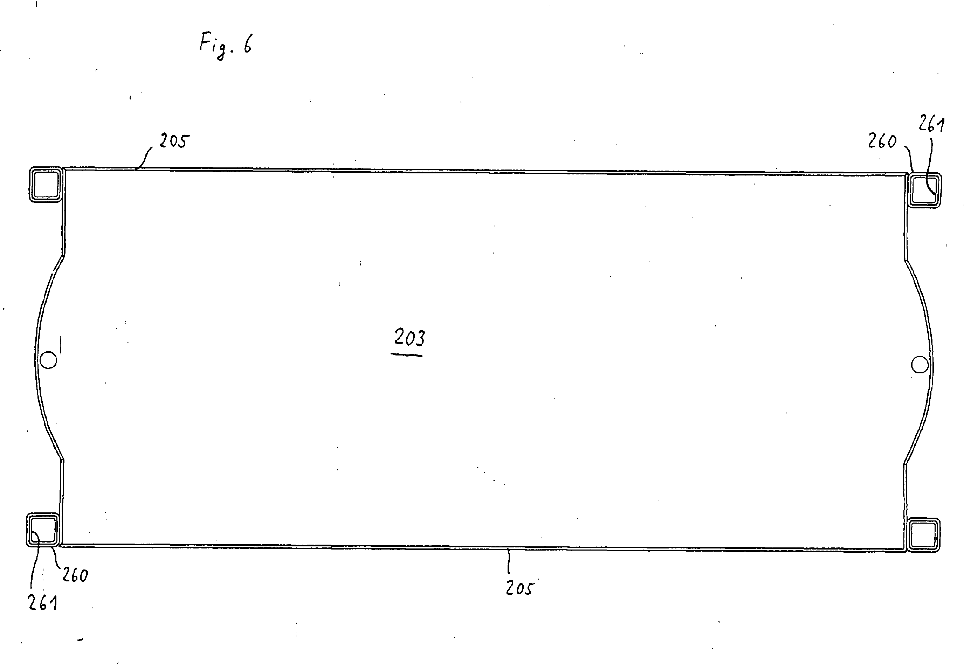

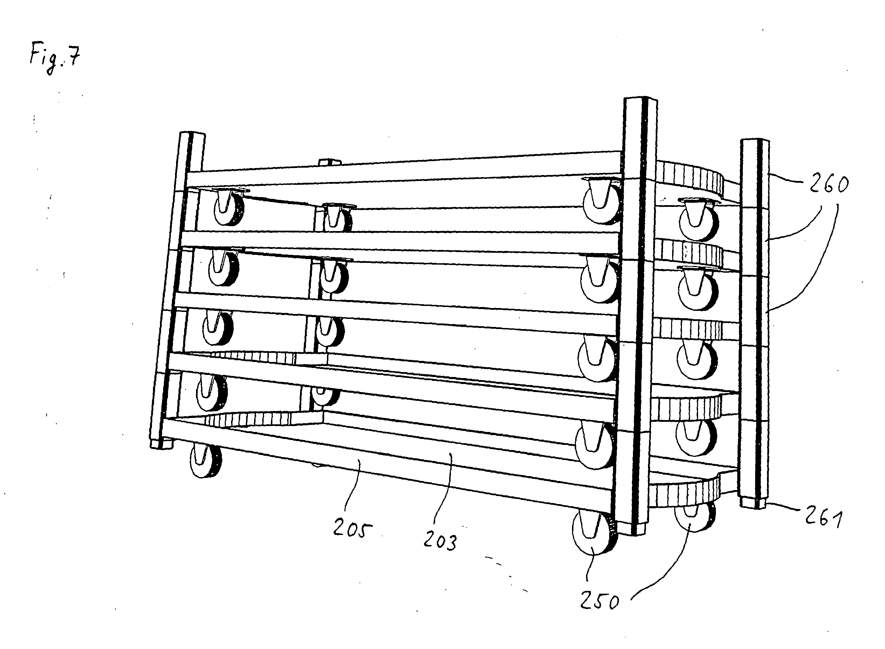

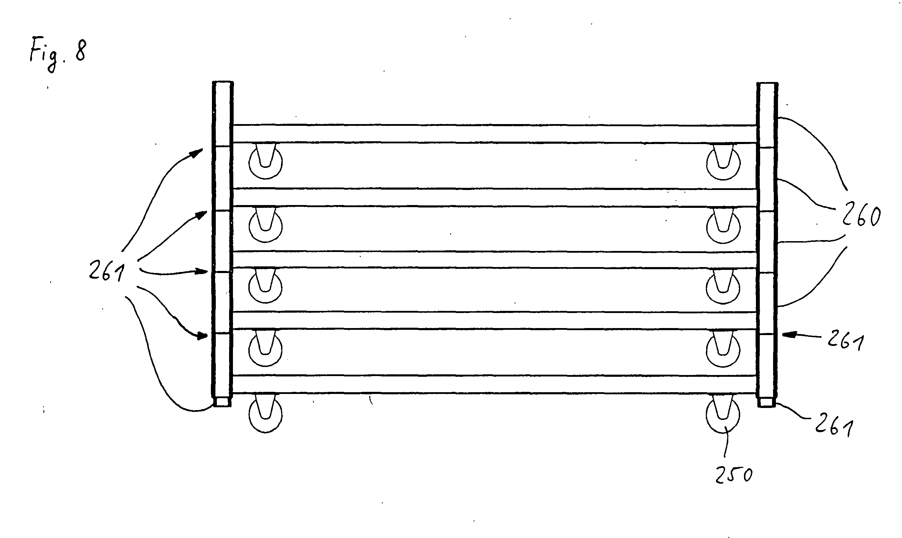

Figur 5 bis 8 erläutern eine weitere Ausführungsform einer erfindungsgemäßen Lagerungsplattform 201, die im Unterschied zu der Lagerungsplattform 101 nach der ersten Ausführungsform einerseits mit an ihrem Boden 203 unterseitig angebrachten Rollen 250 und andererseits im Bereich der Ecken 220 jeweils mit einem Aufnahmemittel 260 für eine (weiter unten noch erläuterte und in Figur 9 bis 11 dargestellte) Gestellstrebe 221 versehen ist. Die Aufnahmemittel 260 sind in diesem Beispiel an Boden 203 und Seitenwänden 205 befestigte Vierkantrohre mit quadratischem Querschnitt, in deren unteren Bereich Anschlagteile 261 in Form von kleineren und kürzeren Vierkantrohrstücken eingesetzt sind, deren Außenkontur der Innenkontur der Vierkantrohre 260 entspricht. Durch diese Maßnahme wird einerseits ein Anschlag für eine von oben in die Aufnahmemittel 260 eingeschobene Gestellstrebe 221 geschaffen, wobei eine Außenkontur der Gestellstrebe im wesentlichen der Innenkontur des Aufnahmemittels 260 entspricht oder zumindest in diese hineinpaßt, und andererseits wird durch die nach unten vorstehenden Bereiche der Anschlagteile 261 eine Stapelbarkeit der Lagerungsplattformen 201 erreicht, was in Figur 7 und 8 dargestellt ist. Selbstverständlich könnten die Aufnahmemittel 260 eine andersartige Querschnittsform aufweisen, z.B. zur Aufnahme von Gestellstreben mit nicht-quadratischem Querschnitt (rechteckig, L-förmig, rund oder in sonstiger Weise geformt).

Figur 9 bis 11 zeigen unterschiedliche Ansichten einer weiteren Ausführungsform einer erfindungsgemäßen Bewässerungsvorrichtung, mit einer untersten Lagerungsplattform 201 gemäß Figur 5 bis 8, zwei Lagerungsplattformen 101 gemäß Figur 1 bis 3 und vier in die Aufnahmemittel 260 der untersten Lagerungsplattform 201 eingesetzten Gestellstreben 221.

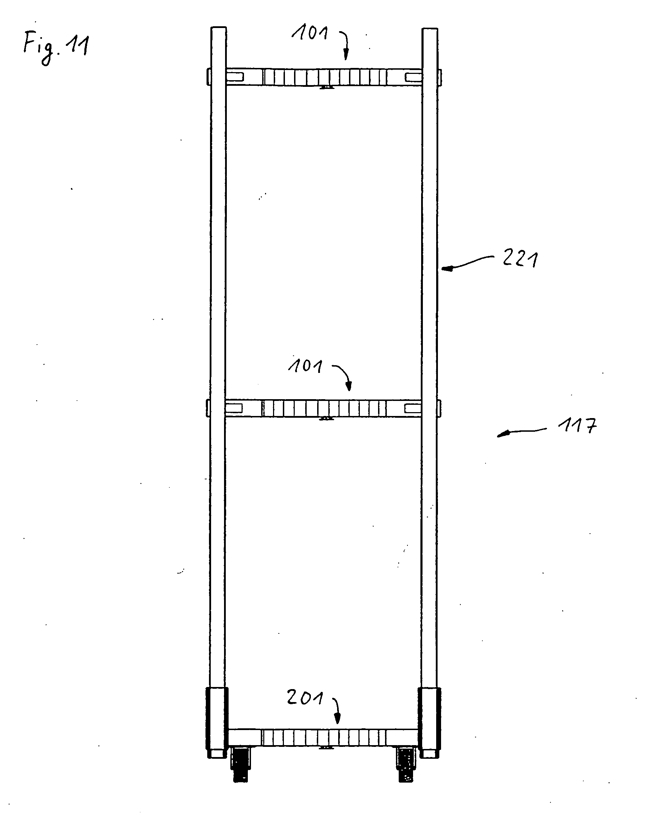

Wie insbesondere Figur 13 und 14 zeigen, sind die Gestellstreben 221 als U-Profile ausgebildet, deren Querschnittsform bzw. Außenkontur quadratisch ist (gleiche Steg- und Schenkellänge) und die daher mit geringem Spiel in die Aufnahmemittel 260 einsetzbar sind, wobei die Anschläge 261 eine definierte Einsetztiefe vorgeben. Die die Anschläge bildenden Vierkantrohrstücke 261 können bspw. ebenso tief in die Aufnahmemittel 260 eingesetzt sein, wie sie daraus vorstehen.

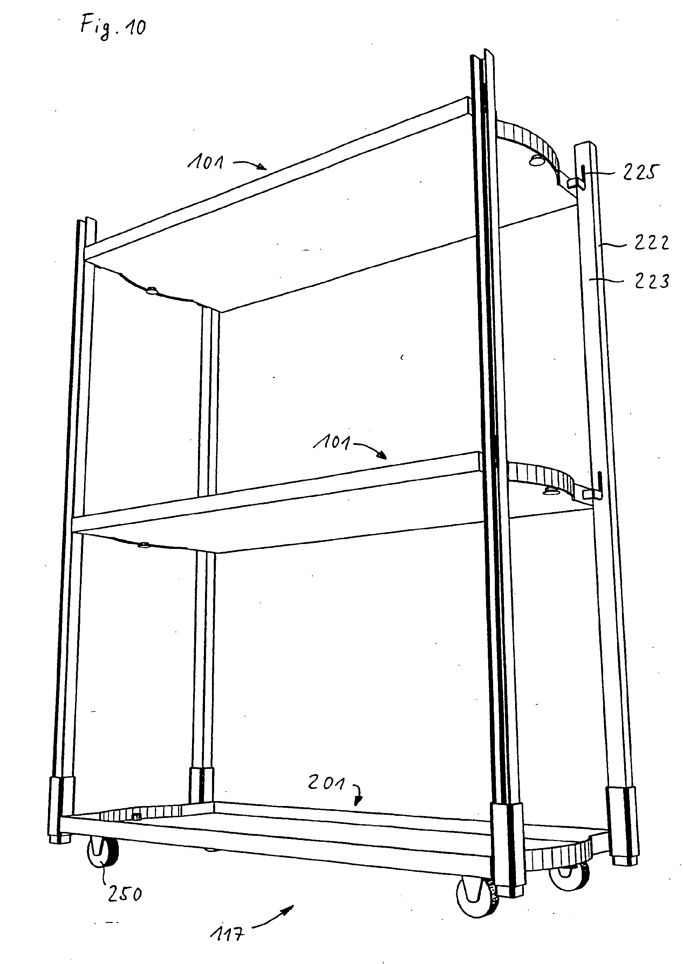

Wie Figur 9 und 10 weiterhin zeigen, sind die Gestellstreben 221 so eingesetzt, daß Schenkelabschnitte 222 nach außen, d.h. in Richtung der Längsseiten 106b der Lagerungsplattformen 102, 201 weisen, während die Schenkelabschnitte 222 verbindende Stegabschnitte 223 der Gestellstreben 221 im wesentlichen parallel zu den Längsseiten 106b und somit zueinander weisend angeordnet sind. Zur Realisierung der erfindungsgemäß erzielten Vorteile ist es allerdings unerheblich, ob Schenkelabschnitte 222 oder Stegabschnitte 223 zueinander weisend angeordnet sind, da es wesentlich nur darauf ankommt, daß im Bereich der Einhängeschenkel 134 der Halterungselemente 130 ein entsprechender Materialbereich einer Gestellstrebe 221 zum Einhängen zur Verfügung steht. Zu diesem Zwecke sind die Stegabschnitte 223 jeweils in einer gewünschten Höhe mit senkrechten bzw. in Längsrichtung der Streben verlaufenden Einhängeschlitzen 225 versehen, in die die Einhängeschenkel 134 eingehängt sind. Dabei umgreifen die Ausnehmungen 136 die Wandstärke des Materials der Stegabschnitte 223. Die Einhängeschlitze 225 von schmalseitigen, d.h. jeweils an einer Schmalseite 106a der Lagerungsplattformen 101, 201 angeordneten Gestellstreben 221 weisen zueinander.

Die in Figur 9 und 10 dargestellten U-förmigen Gestellstreben 221 könnten alternativ gegenüber der dargestellten Stellung um 90° um ihre Längsachse verdreht eingesetzt werden, sofern die Einhängeschlitze 225 in den dann zueinander weisenden Schenkelabschnitten 222 eingebracht wären. Eine um 180° verdrehte Einsetzstellung wäre nur nach entsprechender Abänderung, d.h. Verlängerung der Einhängeschenkel 134 möglich, wobei allerdings eine derartige Anordnung aufgrund der dann nach außen vorstehenden Enden der Einhängeschenkel 134 weniger günstig wäre.

Im Gegensatz zu dem weiter oben beschriebenen Einhängevorgang in Längsrichtung bei einer aus dem Stand der Technik bekannten Lagerungsplattform erfolgt der Einhängevorgang einer Lagerungsplattform 101 in Querrichtung, d.h. so, daß zunächst zwei einer gemeinsamen Längsseite 106b einer Lagerungsplattform zugeordnete Einhängeschenkel 134 in entsprechende Einhängeschlitze 225 eingeschoben werden, dann die einer Längsachse 126 der Lagerungsplattform 101 gegenüberliegenden Einhängeschenkel 134, die der anderen Längsseite 106b zugeordnet sind, auf Höhe der entsprechenden, gegenüberliegenden Einhängeschlitze 225 gebracht und in diese eingeschoben werden. Hierbei ist ersichtlich kein Handhabungsabstand zwischen den stimseitigen Endbereichen bzw. den Schmalseiten 106a der Lagerungsplattform und den Gestellstreben erforderlich. Statt dessen wird ein entsprechender Handhabungsabstand im Bereich zwischen der Erweiterung 124 und den Ecken 120 benötigt, wo er allerdings weit weniger stört.

Die in Figur 9 bis 11 erläuterte Bewässerungsvorrichtung weist gegenüber einer bekannten, bei der Halterungselemente in Längsrichtung (parallel zu den Längsseiten der Lagerungsplattform) angeordnet sind, den Vorteil auf, daß die äußere Längenabmessung La der Lagerungsplattformen 101 (Fig. 1) im Bereich der geraden Abschnitte 106c der Schmalseiten 106a genau dem inneren, lichten Abstand 1 zwischen den Gestellstreben 221 entsprechen kann, ohne daß zwischen den Schmalseiten 106a der Lagerungsplattformen 101 und den Gestellstreben 221 ein Abstand vorgesehen werden muß, der ein Einsetzen der Lagerungsplattformen ermöglicht, wie dies bei einer Ausführung nach dem Stand der Technik notwendig ist, bei der die Halterungselemente in Längsrichtung der Lagerungsplattform verlaufen.

Der auf diese Weise erzielte Längengewinn einer erfindungsgemäßen Lagerungsplattform und der oben genannten Lagerungsfläche kann mehrere Zentimeter betragen und hat bei einem vorgegebenen Abstandsmaß 1 der Gestängestreben 221 zur Folge, daß auf jeder einzelnen Lagerungsplattform 101 mehrere Pflanzgefäße mehr aufgestellt werden können, als dies bei einer Anordnung nach dem Stand der Technik der Fall ist, bei der das Einhängen in Längsrichtung erfolgt. Dies gilt insbesondere aufgrund des Vorhandenseins der Seitenwände 105.

Die Lagerungsplattform oder deren nutzbare Stellfläche (LxB) kann auch näherungsweise oder exakt quadratisch sein, wobei die Vergrößerung der tatsächlich nutzbaren Stellfläche LxB gegenüber dem Stand der Technik aufgrund der erfindungsgemäßen Anordnung der Halterungselmente in diesem Fall geringer ist als bei einer Lagerungsplattform mit größerem Seitenverhältnis, z.B. bei L/B = 2 oder mehr. Die nutzbare Stellfläche wird gegenüber dem Stand der Technik durch die Erfindung in dem Maße vergrößert, in dem in der Draufsicht zwischen in Längs- oder Querrichtung benachbarten Gestellstreben befindliche, streifenförmige Flächenbereiche unterschiedlich groß sind und entweder zur nutzbaren Stellfläche gehören oder nicht, wobei hier auch die Querschnittsform (quadratisch oder rechteckig-länglich) der Gestellstreben einer Rolle spielt.

### Bezugszeichenliste

- 101: Lagerungsplattform
- 103: Boden
- 105: Seitenwand
- 106a: Schmalseite
- 106b: Längsseite
- 106c: gerader Abschnitt
- 107: Öffnung
- 109: Überlauf (Ableitelement)
- 110: zylindrischer Grundkörper
- 111: Bodenwand
- 112: Abflußöffnung
- 113: Längsachse
- 114: Rastmittel/Markierung
- 116: oberer Rand
- 118: Anschlag
- 119: Absatz
- 120: Ecke (von 101)
- 124: Erweiterung
- 126: Längsachse (von 101)
- 130: Halterungselement
- 132: Halteschenkel
- 134: Einhängeschenkel
- 136: Ausnehmung

- 202: Lagerungsplattform
- 203: Boden
- 220: Ecke
- 217: Bewässerungsvorrichtung
- 221: Gestellstrebe
- 222: Schenkelabschnitt
- 223: Stegabschnitt
- 225: Einhängeschlitz
- 250: Rolle
- 260: Aufnahmemittel
- 261: Anschlag

- h: Pegel
- L: Länge innen (von 101, 201)
- La: Länge außen (von 101, 201)
- l: lichter Abstand (von 221)

## Patentansprüche

1. Lagerungsplattform (101) zum Lagern, Bewässern und Transportieren von Pflanzen, die rechteckig ist und an zwei parallelen Schmalseiten (106a) jeweils zwei Halterungselemente (130) zum Einhängen in Gestellstreben (221) aufweist, **dadurch gekennzeichnet, daß** jedes Halterungselement (130) einen entlang der jeweiligen Schmalseite (106a) verlaufenden und in Richtung einer jeweils zunächst liegenden Längsseite (106b) frei endenden Eingriffs-Endabschnitt (134) aufweist.

2. Lagerungsplattform nach Anspruch 1, **dadurch gekennzeichnet, daß** die Eingriffs-Endabschnitte (134) der Halterungselemente (130) jeweils in einem Eckbereich (120) der Lagerungsplattform (101) angeordnet sind.

3. Lagerungsplattform nach Anspruch 1 oder 2, **dadurch gekennzeichnet, daß** die Halterungselemente (130) L-förmig ausgebildet sind und einen Halteschenkel (132) und einen den Eingriffs-Endabschnittbildenden Einhängeschenkel (134) aufweisen.

4. Lagerungsplattform nach Anspruch 3, **dadurch gekennzeichnet, daß** die Halteschenkel (132) an einer Seitenwand (105) befestigt sind.

5. Lagerungsplattform nach einem der Ansprüche 1 bis 4, **dadurch gekennzeichnet, daß** die Eingriffs-Endabschnitte (134) eine Ausnehmung (136) zum formschlüssigen Einhängen in Gestellstreben (221) aufweisen.

6. Lagerungsplattform nach einem der Ansprüche 1 bis 5, **dadurch gekennzeichnet, daß** die Schmalseiten (106a) zwischen den Halterungselementen (130) jeweils mit einer Erweiterung (124) versehen sind, innerhalb der jeweils ein Überlauf (109) angeordnet ist.

7. Lagerungsplattform nach einem der vorangehenden Ansprüche, **dadurch gekennzeichnet, daß** die Lagerungsplattform an einer Unterseite mit Rollen (250) versehen ist.

8. Lagerungsplattform (201) nach einem der vorangehenden Ansprüche, **dadurch gekennzeichnet, daß** die Lagerungsplattform als unterste Lagerungsplattform einer Bewässerungsvorrichtung ausgebildet ist, rechteckig ist und in jedem Eckbereich (220) mit einem Aufnahmemittel (260) für eine Gestellstrebe (221) versehen ist.

9. Lagerungsplattform (101) nach einem der vorangehenden Ansprüche, **dadurch gekennzeichnet, daß** die Lagerungsplattform (101) wannenartig ausgebildet ist und einen Überlauf (109) zum Vorgeben eines gewünschten Flüssigkeitspegels aufweist.

10. Lagerungsplattform (101) nach Anspruch 9, **dadurch gekennzeichnet, daß** die Lagerungsplattform (101) mit Seitenwänden (105) versehen ist.

11. Lagerungsplattform (101) nach Anspruch 9 oder 10, **dadurch gekennzeichnet, daß** der Überlauf (109) zum Einstellen eines gewünschten Flüssigkeitspegels stufenlos oder stufenweise höhenverstellbar ist.

12. Lagerungsplattform (101) nach einem der Ansprüche 9 bis 11, **dadurch gekennzeichnet, daß** der Überlauf ein rohrförmiges Ableitelement (109) aufweist, das fest oder höhenverstellbar in einer Öffnung (107) in der Lagerungsplattform (101) gehalten ist.

13. Lagerungsplattform (101) nach Anspruch 12, **dadurch gekennzeichnet, daß** das Ableitelement (109) stufenweise oder stufenlos höhenverstellbar ist.

14. Lagerungsplattform (101) nach Anspruch 13, **dadurch gekennzeichnet, daß** das Ableitelement (109) optische Markierungen und/oder mechanische Rastmittel (114) in vorbestimmten Positionen aufweist.

15. Lagerungsplattform (101) nach einem der Ansprüche 12 bis 14, **dadurch gekennzeichnet, daß** das Ableitelement (109) mindestens eine seitlich gerichtete Ausflußöffnung (112) aufweist.

16. Lagerungsplattform (101) nach Anspruch 15, **dadurch gekennzeichnet, daß** das Ableitelement (109) drehbar in der Öffnung (107) gehalten ist.

17. Lagerungsplattform (101) nach Anspruch 10, **dadurch gekennzeichnet, daß** zur Bildung des Überlaufs einer Öffnung in einer Seitenwand (105) der Lagerungsplattform (101) ein höhenverstellbares Schiebeelement zugeordnet ist.

18. Lagerungsplattform (101) nach einem der vorangehenden Ansprüche, **dadurch gekennzeichnet, daß** die Lagerungsplattform (101) Halterungselemente (130) wie Haken, Ösen, vorstehende Stifte oder Schienen zum Anbringen an einer Trageinrichtung, insbesondere an Streben (221) eines Gestells, Regals oder Transportwagens, aufweist.

19. Bewässerungsvorrichtung (117) mit mindestens zwei übereinander angeordneten Lagerungsplattformen (101) zum Lagern, Bewässern und Transportieren von Pflanzen, die rechteckig sind und an zwei parallelen Schmalseiten (106a) jeweils zwei Halterungselemente (130) zum Einhängen in Einhängeausnehmungen (225) von Gestellstreben (221) aufweisen, wobei die Lagerungsplattformen (101) so angeordnet sind, daß eine über einen Überlauf (109) einer (jeder) Lagerungsplattform (101) ablaufende Flüssigkeit in eine darunter, insbesondere zunächst benachbart angeordnete Lagerungsplattform (101) fließen kann, mit vier vertikalen Gestellstreben (221), die in Eckbereichen (220) der Lagerungsplattformen (101) angeordnet und mit Einhängeausnehmungen (225) zum Einhängen der Halterungselemente (130) versehen sind, wobei die Einhängeausnehmungen (225) von jeweils einer Schmalseite (106a) der Lagerungsplattform (101) zugeordneten Gestellstreben (221) zumindest teilweise einander zugekehrt sind, so daß die Lagerungsplattformen (101) in Querrichtung einsetz- und herausnehmbar sind.

20. Bewässerungsvorrichtung (117) nach Anspruch 19, **dadurch gekennzeichnet, daß** sie mit mindestens einer Lagerungsplattform (101) nach einem der Ansprüche 1 bis 18 versehen ist.

21. Bewässerungsvorrichtung (117) nach Anspruch 20, soweit rückbezogen auf einen der Ansprüche 12 bis 16, **dadurch gekennzeichnet, daß** die Lagerungsplattformen (101) so angeordnet sind, daß das rohrförmige Ableitelement (109) einer (jeder) oberen Lagerungsplattform (101) bis auf einen Boden (103) einer darunter, insbesondere zunächst benachbart, angeordneten Lagerungsplattform (101) reicht.

22. Bewässerungsvorrichtung (117) nach einem der Ansprüche 19 bis 21, **dadurch gekennzeichnet, daß** die Gestellstreben (221) L-,U- oder Rechteckprofile sind.

## Claims

1. A storage tray (101) for storing, watering and transporting plants, which is rectangular and has two mounting members (130) on each of two parallel narrow sides (106a) for hanging in frame struts (221), **characterised in that** each mounting member (130) has an engagement end portion (134) extending along the respective narrow side (106a) and ending freely in the direction of the long side (106b) located closest in each case.

2. The storage tray as claimed in claim 1, **characterised in that** the engagement end portions (134) of the mounting members (130) are each located in a corner area (120) of the storage tray (101).

3. The storage tray as claimed in either of claims 1 or 2, **characterised in that** the mounting members (130) are L-shaped and have a mounting limb (132) and an insertion limb (134) forming the engagement end portion.

4. The storage tray as claimed in claim 3, **characterised in that** the mounting limbs (132) are attached to a side wall (105).

5. The storage tray as claimed in any of claims 1 to 4, **characterised in that** the engagement end portions (134) have an indentation (136) for hanging in frame struts (221) in a positive fit.

6. The storage tray as claimed in any of claims 1 to 5, **characterised in that** the narrow sides (106a) between the mounting members (130) are each provided with an enlarged portion (124), within which is disposed an overflow (109) in each case.

7. The storage tray as claimed in any of the preceding claims, **characterised in that** the storage tray is provided with rollers (250) on an underside.

8. The storage tray (201) as claimed in any of the preceding claims, **characterised in that** the storage tray is designed as the lowest storage tray of a watering device, is rectangular and is provided with a receiving means (260) for a frame strut (221) in each corner area (220).

9. The storage tray (101) as claimed in any of the preceding claims, **characterised in that** the storage tray (101) is shaped like a pan and has an overflow (109) to lay down a desired liquid level.

10. The storage tray (101) as claimed in claim 9, **characterised in that** the storage tray (101) is provided with side walls (105).

11. The storage tray (101) as claimed in claim 9 or 10, **characterised in that** the overflow (109) is stepwise or infinitely height-adjustable for setting a desired liquid level.

12. The storage tray (101) as claimed in any of claims 9 to 11, **characterised in that** the overflow has a tubular drainage member (109) mounted firmly or in a height-adjustable manner in an opening (107) in the storage tray (101).

13. The storage tray (101) as claimed in claim 12, **characterised in that** the drainage member (109) is height-adjustable, stepwise or infinitely.

14. The storage tray (101) as claimed in claim 13, **characterised in that** the drainage member (109) has visual marks and/or mechanical locking members (114) in predetermined positions.

15. The storage tray (101) as claimed in any of claims 12 to 14, **characterised in that** the drainage member (109) has at least one drainage opening (112) pointing to the side.

16. The storage tray (101) as claimed in claim 15, **characterised in that** the drainage member (109) is rotatably mounted in the opening (107).

17. The storage tray (101) as claimed in claim 10, **characterised in that**, in order to form the overflow, an opening in a side wall (105) of the storage tray (101) has a height-adjustable sliding member associated with it.

18. The storage tray (101) as claimed in any of the preceding claims, **characterised in that** the storage tray (101) has mounting members (130) such as hooks, eyes, projecting pins or rails for attaching it to a supporting means, especially to struts (221) of a frame, shelf or trolley.

19. A watering device (117) with at least two storage trays (101) disposed one on top of the other for storing, watering and transporting plants, said storage trays being rectangular and having, on each of two parallel narrow sides (106a) two mounting members (130) for hanging in insertion recesses (225) of frame struts (221), the storage trays (101) being arranged such that any liquid running over an overflow (109) of a/each storage tray (101) can flow into a storage tray (101) located beneath it, and in particular the one immediately below, and being provided with four vertical frame struts (221) disposed in corner areas (220) of the storage trays (101), and with insertion recesses (225) for hanging the mounting members (130) in, the insertion recesses (225) in frame struts (221) associated in each case with a narrow side (106a) of the storage tray (101) at least partially facing each other, so that the storage trays (101) can be inserted and removed in the transverse direction.

20. The watering device (117) as claimed in claim 19, **characterised in that** it is provided with at least one storage tray (101) as claimed in any of claims 1 to 18.

21. The watering device (117) as claimed in claim 20, when dependent on any of claims 12 to 16, **characterised in that** the storage trays (101) are arranged such that the tubular drainage member (109) of a/each upper storage tray (101) extends right down to a floor (103) of a storage tray (101) located beneath it, and in particular the one immediately below.

22. The watering device (117) as claimed in any of claims 19 to 21, **characterised in that** the frame struts (221) are L or U-shaped or rectangular profiles.

## Revendications

1. Palette de stockage (101), pour le stockage, l'irrigation et le transport de plantes, présentant une forme rectangulaire et, sur chacun des deux côtés étroits (106a) parallèles, deux éléments de fixation (130) pour l'accrochage d'entretoises de bâti (221), **caractérisée en ce que** chaque élément de fixation (130) présente un tronçon d'extrémité d'engagement (134), s'étendant le long du côté étroit (106a) respectif et s'achevant librement, en direction chaque fois du côté longitudinal (106b) immédiatement voisin.

2. Palette de stockage selon la revendication 1, **caractérisée en ce que** les tronçons d'extrémité d'engagement (134) des éléments de fixation (130) sont chacun disposés dans une zone d'angle (120) de la palette de stockage (101).

3. Palette de stockage selon la revendication 1 ou 2, **caractérisée en ce que** les éléments de fixation (130) sont conformés en L et présentent une branche de maintien (132) et une branche d'accrochage (134) formant le tronçon d'extrémité d'engagement.

4. Palette de stockage selon la revendication 3, **caractérisée en ce que** les branches de maintien (132) sont fixées sur une paroi latérale (105).

5. Palette de stockage selon l'une des revendications 1 à 4, **caractérisée en ce que** les tronçons d'extrémité d'engagement (134) présentent un évidement (136) pour l'accrochage, avec liaison à ajustement de forme, dans des entretoises de bâti (221).

6. Palette de stockage selon l'une des revendications 1 à 5, **caractérisée en ce que** les côtés étroits (106a) sont chacun munis, entre les éléments de fixation (130), d'un élargissement (124), à l'intérieur de chacun desquels est disposé un déversoir (109).

7. Palette de stockage selon l'une des revendications précédentes, **caractérisée en ce que** la palette de stockage est munie, en une face inférieure, de galets (250).

8. Palette de stockage (201) selon l'une des revendications précédentes, **caractérisée en ce que** la palette de stockage est réalisée sous forme de palette de stockage de position la plus basse d'un dispositif d'irrigation, est de forme rectangulaire et, dans chaque zone d'angle (220), est munie d'un moyen de logement (260) pour une entretoise de bâti (221).

9. Palette de stockage (101) selon l'une des revendications précédentes, **caractérisée en ce que** la palette de stockage (101) est conformée en auge et présente un déversoir (109), pour la fixation d'un niveau de liquide souhaité.

10. Palette de stockage (101) selon la revendication 9, **caractérisée en ce que** la palette de stockage (101) est munie de parois latérales (105).

11. Palette de stockage (101) selon la revendication 9 ou 10, **caractérisée en ce que** le déversoir (109) est réglable en hauteur, de façon progressive continue ou par degrés, afin de régler un niveau de liquide souhaité.

12. Palette de stockage (101) selon l'une des revendications 9 à 11, **caractérisée en ce que** le déversoir présente un élément de dérivation (109) tubulaire, maintenu, de façon rigide ou réglable en hauteur, dans une ouverture (107) ménagée dans la palette de stockage (101).

13. Palette de stockage (101) selon la revendication 12, **caractérisée en ce que** l'élément de dérivation (109) est réglable en hauteur, par degrés ou bien de façon progressive continue.

14. Palette de stockage (101) selon la revendication 13, **caractérisée en ce que** l'élément de dérivation (109) présente des marquages optiques et/ou des moyens d'encliquetage mécaniques (114), en des positions prédéterminées.

15. Palette de stockage (101) selon l'une des revendications 12 à 14, **caractérisée en ce que** l'élément de dérivation (109) présente au moins une ouverture d'évacuation (112) orientée latéralement.

16. Palette de stockage (101) selon la revendication 15, **caractérisée en ce que** l'élément de dérivation (109) est maintenu dans l'ouverture (107) d'une façon permettant une rotation.

17. Palette de stockage (101) selon la revendication 10, **caractérisée en ce que**, pour former le déversoir, à une ouverture, ménagée dans une paroi latérale (105) de la palette de stockage (101), est associé un élément coulissant réglable en hauteur.

18. Palette de stockage (101) selon l'une des revendications précédentes, **caractérisée en ce que** la palette de stockage (101) présente des éléments de fixation (130), tels que des crochets, des oeillets, des tétons ou des glissières en saillie, pour l'adjonction à un dispositif support, en particulier sur des entretoises (221) d'un bâti, d'une étagère ou d'un chariot de transport.

19. Dispositif d'irrigation (117), comprenant au moins deux palettes de stockage (101) disposées l'une au-dessus de l'autre, pour stocker, irriguer et transporter des plantes, présentant une forme rectangulaire et, sur chacun des deux côtés étroits (106a) parallèles, présentant deux éléments de fixation (130) pour accrochage dans des évidements d'accrochage (225) d'entretoises de bâti (221), les palettes de stockage (101) étant disposées de manière qu'un liquide, s'écoulant par un déversoir (109) de (chaque) palette de stockage (101), puisse s'écouler dans une palette de stockage (101) sous-jacente, disposée en particulier au voisinage immédiat, avec quatre entretoises de bâti (221) verticales, disposées dans des zones d'angle (220) des palettes de stockage (101) et munies d'évidements d'accrochage (225) pour accrochage des éléments de fixation (130), les évidements d'accrochage (225), de chaque fois un côté étroit (106a) de la palette de stockage (101), d'entretoises de bâti (221) associées étant tournés au moins partiellement les uns vers les autres, de manière que les palettes de stockage (101) puissent être insérées et extraites en direction transversale.

20. Dispositif d'irrigation (117) selon la revendication 19, **caractérisé en ce qu'**il est muni d'au moins une palette de stockage (101) selon l'une des revendications 1 à 18.

21. Dispositif d'irrigation (117) selon la revendication 20, dans la mesure où il se réfère à l'une des revendications 12 à 16, **caractérisé en ce que** les palettes de stockage (101) sont disposées de manière que l'élément de dérivation (109) à forme tubulaire d'une (de chaque) palette de stockage (101) supérieure arrive jusqu'à un fond (103) d'une palette de stockage (101) sous-jacente, en particulier immédiatement voisine.

22. Dispositif d'irrigation (117) selon l'une des revendications 19 à 21, **caractérisé en ce que** les entretoises de bâti (221) sont des profilés en forme de L, de U ou rectangulaires.
